(19) Europäisches Patentamt
European Patent Office
Office européen des brevets

(11) **EP 3 391 240 B1**

(12) **FASCICULE DE BREVET EUROPEEN**

(45) Date de publication et mention de la délivrance du brevet:
**10.07.2024 Bulletin 2024/28**

(21) Numéro de dépôt: **16820228.1**

(22) Date de dépôt: **16.12.2016**

(51) Classification Internationale des Brevets (IPC):
**G06F 17/18** (2006.01)    **G06Q 50/06** (2024.01)
**H04Q 9/00** (2006.01)    **G01D 4/00** (2006.01)
**G06Q 30/02** (2023.01)

(52) Classification Coopérative des Brevets (CPC):
**G06F 17/18; G01D 4/00; G06Q 30/02; G06Q 50/06; H04Q 9/00;** G01D 2204/14; H04Q 2209/60; Y02B 90/20; Y04S 20/30

(86) Numéro de dépôt international:
**PCT/EP2016/081381**

(87) Numéro de publication internationale:
**WO 2017/103069 (22.06.2017 Gazette 2017/25)**

(54) **TRAITEMENT DES DONNEES DE TELERELEVEE POUR L'ANALYSE DES MODES DE CONSOMMATION**

VERARBEITUNG VON ENTFERNTEN MESSGERÄTELESEDATEN ZUR ANALYSE VON VERBRAUCHSMODI

PROCESSING OF REMOTE METER-READING DATA TO ANALYSE CONSUMPTION MODES

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **17.12.2015 FR 1562695**

(43) Date de publication de la demande:
**24.10.2018 Bulletin 2018/43**

(73) Titulaire: **SUEZ International**
**92040 Paris La Défense Cedex (FR)**

(72) Inventeurs:
• **BATISSE, Julien**
 **33650 Saint-Selve (FR)**
• **CLAUDIO, Karim**
 **33000 Bordeaux (FR)**

(74) Mandataire: **Lavoix**
**2, place d'Estienne d'Orves**
**75441 Paris Cedex 09 (FR)**

(56) Documents cités:
**WO-A1-2014/060655    FR-A1- 2 972 529**

## Description

### Domaine de l'invention

L'invention concerne le domaine technique du traitement de données, et en particulier le traitement de données de consommation d'eau et/ou d'énergie.

### Etat de la Technique

Les consommations d'eau ou d'énergie des usagers, qu'ils soient des particuliers ou des industriels, sont actuellement suivies par des opérations dites de télérelève, c'est-à-dire par la transmission à distance des relevés de compteurs de consommation.

De telles opérations sont par exemple décrites dans FR 2 972 529 A1.

Ces opérations constituent aujourd'hui un levier d'accompagnement des usagers vers une gestion durable de leur consommation. Plus qu'une analyse effectuée de manière passive et a posteriori, la qualité de l'information, i.e. de l'analyse des données télérelevées peut conditionner des changements des modes de consommation des usagers.

A une échelle collective, les collectivités territoriales et les bailleurs sociaux en particulier ont besoin de mieux connaître leurs consommations (par exemple en eau), sur leur territoire. Nombreuses sont les collectivités locales qui attendent et apprécient des données fiables et pertinentes pour améliorer leur politique de gestion de l'eau et/ou leurs projets d'aménagement. À une échelle plus locale et individuelle, les ménages trouvent également avantage à mieux comprendre leurs niveaux de consommation en eau et/ou en énergie (électricité et/ou gaz par exemple).

L'état de la technique en matière de consommation d'eau (ou d'électricité) décrit diverses solutions techniques, correspondant à autant d'approches différentes. La littérature brevet par exemple se cantonne généralement à une approche orientée vers la technologie des procédés et des systèmes pour l'acquisition de données (par exemple en temps réel, comme dans CN104362756). D'autres publications accessibles restent également limitées à l'utilisation de techniques statistiques qui demeurent essentiellement descriptives (e.g. fouille de données appliquées aux données brutes de consommations).

Bien qu'intéressantes, les limites de ces approches connues ne permettent pas de satisfaire pleinement les besoins d'analyse évoqués précédemment. Il existe un besoin pour des procédés et des systèmes d'analyse des modes de consommations en eau et/ou énergie.

### Résumé de l'invention

L'invention concerne un procédé selon la revendication indépendante 1, un programme selon la revendication indépendante 11 et un système selon la revendication indépendante 12.

Des développements décrivent l'utilisation de données additionnelles, notamment cartographiques, correspondant avec le profil d'usager déterminé ; la détermination de tendances de consommation ; la détermination d'un modèle de consommation de référence ; la comparaison des consommations télérelevées avec le modèle de référence ; Des aspects de système et de logiciel sont également décrits, notamment de consultation à distance des informations relatives aux données de consommation, aux groupes d'usagers, aux profils d'usagers, aux tendances de consommation ou aux modèles de consommation de référence.

L'invention s'applique avantageusement à la gestion des données de gestion d'eau, mais par extension s'applique aussi à la gestion de données de consommation de ressources apparentées (telles que la consommation d'électricité ou de gaz)

Les modes de réalisation de l'invention s'appliquent en effet à de nombreux secteurs des utilities. Le terme utilities est un terme anglais qui désigne les services fournis aux collectivités comme la production et la distribution de l'eau, du gaz et de l'électricité (liste non exhaustive).

Les données de consommation peuvent en effet concerner l'une ou l'autre de ces ressources (ou même des données synthétiques ou composites de consommation, par exemple des données combinant des données de consommation en énergie-gaz et des données de consommation en énergie-électricité). Les données manipulées par le procédé selon l'invention peuvent donc être abstraites (e.g. points ou scores de consommation eau-gaz-électricité-déchets).

Dans des modes de réalisation particuliers, l'invention peut également s'appliquer à la gestion des déchets. Le volume de déchets produit par usager peut être mesuré ou au moins estimé (e.g. « poubelle connectée », analyse et reconnaissance d'images ou de vidéos, etc). Dès lors, des modes de réalisation de l'invention peuvent être mis en oeuvre.

Une consommation en eau sera par exemple mesurée en $m^3$/an, une consommation électrique en kWh, une consommation de gaz en $m^3$/an et une production de déchets en $m^3$/an.

Avantageusement, le procédé permet d'identifier les usages en matière de consommation d'eau.

Avantageusement, le procédé selon l'invention permet un diagnostic et un suivi des consommations d'eau, notamment pour les collectivités territoriales et les bailleurs.

Avantageusement, l'approche méthodologique multidisciplinaire permet aux usagers (domestiques, administratifs, industriels, etc.) de comprendre, suivre et agir sur leur consommation à différentes échelles (du service au quartier).

Avantageusement, le procédé selon l'invention prend en compte des aspects temporels dans le suivi des consommations (ex. évolution à long terme des niveaux de consommations, variations conjoncturelles de consommations) ainsi que des aspects contextuels (ex. climat, territoire, habitudes de consommations).

Avantageusement, le procédé selon l'invention permet d'améliorer l'offre de fourniture de ressources, en plus d'analyser la demande en ressources.

Avantageusement, les analyses permises par le procédé selon l'invention permettent de renforcer les liens de coopération et de confiance entre le fournisseur de service et les différents acteurs du territoire (e.g. collectivité, association, bailleur, usagers).

Avantageusement, le procédé selon l'invention mobilise des données externes aux données de consommations d'eau. Les solutions connues de l'état de la technique n'opèrent pas de croisements d'information. En particulier selon l'invention, les données de consommation télérelevées sont enrichies avec des données socio-économiques. Ces données socio-économiques résultent soit d'étapes d'agrégation de données (par exemple via les données de recensement par quartier de l'INSEE) et/ou sont reçues directement des usagers (par exemple via des enquêtes). Ces analyses permettent de développer de nouveaux services, lesquels permettent en retour de maîtriser, i.e. de moduler et éventuellement de réduire leurs consommations d'eau. Dans un mode de réalisation, le croisement des données est effectué au moyen de méthodes de classification statistiques et/ou sociologiques (e.g. sociologie comportementale).

Avantageusement, le procédé selon l'invention permet de mettre à disposition des usagers, des collectivités et bailleurs les données initiales et /ou enrichies.

Avantageusement, le suivi et le contrôle des consommations peuvent être restitués selon des modalités spécifiques à chaque profil d'usagers. Par exemple, chaque usager pourra accéder à son profil de consommation, pour avoir une compréhension globale de sa consommation. Il pourra également accéder à un ou plusieurs modèles le représentant (i.e. anticipation). Accédant à des données selon divers horizons temporels (à court, moyen et long terme), aux données factuellement observées ainsi qu'aux anticipations le concernant, l'usager ou les usagers considérés peut/peuvent alors modifier (le cas échéant) ses/leurs modes de consommations (i.e. boucle de rétroaction, cycle vertueux). Par exemple, l'usager pourra agir en conséquence sur ses consommations en travaillant sur ses déterminants de consommation et en mesurant l'efficacité de son engagement par rapport à ses pairs (i.e. contrôle), c'est-à-dire vis à vis des usagers apparentés au même profil.

Avantageusement, l'invention fournit des moyens d'analyse pour définir des stratégies d'accompagnement de baisse de la consommation en fonction des tendances de consommation sur une zone prédéterminée. Les données peuvent être à l'échelon local (i.e. par quartier) ou global (i.e ensemble de territoires formant un échelon de taille supérieure).

Avantageusement, l'invention fait usage des données de consommation télérelevées pour déterminer des profils globaux de consommation et exploiter ces données primaires en les croisant avec des usages déclarés (obtenus par enquête, questionnaire en ligne, etc). De la sorte, l'obtention de profils de consommateur permet d'exploiter d'autres données disponibles par ailleurs. Autrement dit, sans l'invention, les données de consommation d'une part et les usages de consommation d'autre part resteraient au moins partiellement cloisonnées ou incompatibles ou compartimentées.

Avantageusement, les modes de réalisation de l'invention permettent aux usagers de comparer leurs consommations avec un ou plusieurs profils de référence.

Avantageusement, l'invention permet de caractériser - ou même de quantifier - l'impact anthropique sur le milieu, permettant la mise en oeuvre d'actions correctrices. Avantageusement, des analyses de données synthétiques peuvent être communiquées aux usagers, lesquelles données infléchissent en retour les modes de consommation selon un cycle vertueux et durable. Les échelles d'analyse étant configurables, la mise en correspondance entre les données de terrain *(« bottom-up »)* et les analyses sur les usages de consommation (« top-down ») peut être améliorée.

Avantageusement, certains modes de réalisation de l'invention permettent d'assister et/ou de réguler la consommation en eau/énergie d'un usager ou d'un foyer en calculant et en faisant référence à un modèle de consommation, ce modèle invoquant notamment des données externes aux données issues de télémesures (en particulier par croisement avec des données sociodémographiques et/ou cartographiques).

Avantageusement, à titre de conséquence de telles comparaisons entre consommation effective et modélisée, les modalités d'interaction avec les usagers peuvent utiliser des notifications (retours d'information) et/ou des rétroactions physiques, tangibles et flexibles (diminution ou arrêt progressif et/ou sélectif de livraison à la ressource en eau/énergie).

Avantageusement selon l'invention, l'application de méthodes statistiques spécifiques (e.g. croisement des données de consommation avec des données externes notamment de type socio-économiques) permet de définir des référentiels géographiquement contextualisés.

## Description des figures

D'autres caractéristiques et avantages de l'invention apparaîtront à l'aide de la description qui suit et des figures des dessins annexés dans lesquels:

La figure 1 montre des exemples d'étapes du procédé selon l'invention;

La figure 2 montre un exemple de partitionnement des usagers en fonction des niveaux ou strates de consommation;

La figure 3 montre un exemple de partitionnement des usagers en fonction de groupes de variation des consommations;

La figure 4 montre un exemple de consommation journalière moyenne selon différents exemples de profils d'usagers au cours d'une année;

La figure 5 montre un exemple croisement de données de consommation avec des données sociodémographiques;

La figure 6 illustre un exemple d'analyse comparée des consommations pour un usager;

La figure 7 illustre un exemple d'analyse territoriale des profils de consommation; et

La figure 8 illustre un exemple d'accès aux données et analyses de consommation.

**Description détaillée de l'invention**

Un usager selon l'invention est également appelé client ou consommateur, selon les contextes.

Un usager est un générateur de données de consommation d'une ressource donnée (eau, électricité, gaz, déchets...). Un consommateur peut correspondre à une personne physique individualisée ou à un agrégat de personnes physiques. Un consommateur peut être une personne morale (e.g. une société ou une administration comme un hôpital). Dans un mode de réalisation à plus grande échelle, un usager ou un consommateur peut être par exemple une collectivité ou un bailleur social ou un territoire. Les champs d'application de l'invention concernent les usagers de type domestique, de type industriel ou encore de type administratif.

Il est décrit un procédé mis en oeuvre par ordinateur de gestion d'une ressource en eau et/ou en énergie, le procédé comprenant les étapes consistant à : - recevoir des données initiales de consommation de la ressource en eau et/ou en énergie d'au moins un usager, lesdites données de consommation étant télérelevées depuis une pluralité de compteurs communicants; - déterminer un profil d'usager ; - déterminer un modèle de consommation, dit de référence, associé au profil d'usager ; - comparer la consommation en ressource en eau et/ou en énergie de l'usager avec ledit modèle de consommation de référence ; et - notifier l'usager en cas de différence par rapport à un seuil prédéfini.

La télérelève d'un compteur permet d'obtenir le relevé de ce compteur à distance, i.e. sans avoir besoin d'accéder physiquement au compteur. Le compteur est alors dit "communicant" ou "intelligent" ("Smart meter" en anglais).

Selon l'invention, des rétroactions vers les consommateurs des ressources, dits usagers, sont déterminées et mises en oeuvre.

Comme premier type de rétroaction, des retours d'informations (par exemple sous forme de notifications) sont effectués à destination de l'usager (e.g. du foyer considéré). Ce retour d'information vise à améliorer l'apprentissage (e.g. comportemental) et/ou à faciliter des économies (l'usager peut définir lui-même des objectifs d'économies). Avantageusement, un objet connecté selon l'invention permet un retour individualisé (e.g. pour chacun des compteurs, ou une partie d'entre eux), i.e. « local » et « continu ».

Des différences défavorables par rapport au référentiel peuvent être notifiées mais également des différences favorables. Avantageusement, des notifications, par témoins LED par exemple, restent discrets dans l'habitat (ne constituent pas des éléments de « pression sociale »).

Dans un mode de réalisation, l'usager est notifié (seulement) en cas de différence favorable par rapport à un seuil prédéfini (par exemple inférieur)

Dans un mode de réalisation, l'usager est notifié (seulement) en cas de différence défavorable par rapport à un seuil prédéfini (par exemple supérieur)

Dans un mode de réalisation, l'usager est notifié en cas de différence favorable ou défavorable par rapport à un seuil prédéfini (dans les deux cas)

Dans ce qui précède, un seuil peut être remplacé par une pluralité de seuils ou une plage de seuils (existence d'une tolérance dans la comparaison). Le seuil peut également être calculé dynamiquement, par exemple être modulé par des coefficients globaux en fonction de facteurs externes, par exemple l'heure de la journée, la saison ou un événement comme un match de football impliquant des conséquences de réseau eau/énergie significative.

Dans un mode de réalisation le procédé comprend en outre l'étape consistant à modifier l'approvisionnement en eau et/ou énergie en fonction de la différence avec le seuil prédéfini.

Dans un mode de réalisation, le procédé comprend en outre une boucle de rétroaction physique/tangible. Dans un mode de réalisation, le procédé comprend une étape consistant à « ajuster » ou « modifier » l'approvisionnement ou l'alimentation ou la distribution en eau et/ou en énergie.

Par modification de l'approvisionnement, on entend diminution et/ou augmentation (des modalités n'étant pas mutuellement exclusives, i.e. une diminution peut être suivie d'une augmentation ou inversement, selon les évolutions autour du niveau de référence déterminé).

Dans un mode de réalisation/rétroaction, par exemple en accord avec l'usager/foyer, une rétroaction physique i.e. tangible peut être implémentée. Cette rétroaction peut être mise en oeuvre de manière automatique par un moyen de commande d'une vanne d'approvisionnement en eau et/ou énergie de l'usager/foyer, ledit moyen de commande étant relié à un moyen de calcul de la comparaison entre la consommation en ressource en eau et/ou en énergie de l'usager avec ledit modèle de consommation de référence. En fonction de la hiérarchie des usages de consommation des ressources ayant été pré-approuvée par l'usager/foyer, un ajustement de consommation peut être effectué.

Dans un mode de réalisation, l'étape de détermination d'un profil d'usager comprend une étape consistant à déterminer des strates de consommation de la ressource, chaque strate de consommation étant associée à une valeur de la consommation de la ressource selon un premier pas de temps ; - une étape consistant à déterminer des groupes d'usagers, chaque groupe d'usagers étant associé à un taux de variation de la valeur de consommation selon un second pas de temps ; - une étape consistant à déterminer au moins un profil d'usager en fonction des groupes d'usagers déterminés et des strates de consommation déterminées.

Dans un mode de réalisation le procédé comprend en outre une étape consistant à recevoir des données additionnelles pouvant être mises en correspondance avec le profil d'usager déterminé et une étape consistant à déterminer une tendance de consommation à partir du profil d'usager déterminé et desdites données additionnelles reçues.

Dans un mode de réalisation, l'étape consistant à déterminer les strates de consommation est effectuée de manière à minimiser la variance intra-strate.

Dans un mode de réalisation l'étape consistant à déterminer des profils d'usagers comprend une étape consistant à déterminer des profils d'usagers, chaque profil d'usager étant associé à une strate et un groupe de variation de consommation.

Dans un mode de réalisation le procédé comprend en outre une étape consistant à agréger plusieurs profils d'usagers.

Dans un mode de réalisation le procédé comprend en outre une étape consistant à fournir un accès distant aux informations relatives aux données de consommation, aux groupes d'usagers, aux profils d'usagers, aux tendances de consommation ou aux modèles de consommation de référence.

Dans un mode de réalisation, la modification de l'approvisionnement en eau et/ou en énergie est fonction de niveaux de criticité associés aux compteurs communicants.

Les « objets connectés » ou « compteurs communicants » ou « compteurs intelligents » peuvent en effet être associés à des niveaux de criticités différents. Dans un mode de réalisation, un objet connecté ou compteur communicant est associé à un niveau de criticité parmi une pluralité.

En matière d'approvisionnement en eau, les compteurs peuvent notamment comprendre des compteurs individuels de type « eau de boisson/eau de cuisine », des compteurs de type « eau de lavage », eux-mêmes distinguant les compteurs de type « eau de lave-vaisselle », « eau de lave-linge », « eau de douche/baignoire », des compteurs de type « eau de jardin », etc.

En matière d'approvisionnement en énergie, les compteurs comprennent notamment des compteurs d'approvisionnement en gaz, des compteurs électriques différenciés en différentes classes selon la criticité des usages (par importance décroissante : alimentation frigorifique, luminaires, alimentation des appareils ménagers ou informatiques, etc).

Avantageusement, cet ajustement/modification, par diminution ou augmentation, peut être progressif et/ou sélectif. En matière de sélectivité, par exemple, pourront être automatiquement diminués les éclairages et/ou les robinets d'alimentation en eau non-essentiels (e.g. jardin). A l'inverse, seront préservés voire sécurisés les accès en eau de boisson ou l'alimentation en électricité du réfrigérateur ménager. La progressivité des ajustements est également avantageuse, car si un accès particulier est stoppé et signalé comme tel, une prise de conscience peut être facilitée.

Dans un mode de réalisation, un niveau de criticité associé à un compteur communicant est configurable par l'usager.

Dans un mode de réalisation, le niveau de criticité d'un objet connecté et donc de la ressource associée à cet objet est configurable. Un usager/foyer peut configurer la hiérarchie des différents postes de consommation selon ses propres préférences (un foyer pourra par exemple donner priorité aux appareils informatiques sur les luminaires).

Dans un mode de réalisation, la modification de l'approvisionnement en eau et/ou énergie est progressive et/ou sélective.

La progressivité de la modulation de l'approvisionnement peut avantageusement induire des courbes d'apprentissage plus ou moins rapides et/ou acceptables pour l'usager (par exemple dictés par les besoins/contraintes du distributeur et/ou selon des préférences locales). La sélectivité se réfère aux différentes localisations physiques associées aux points de consommation répartis dans l'habitat et/ou se réfère aux différentes catégories de postes de consommation, éventuellement hiérarchisés selon des niveaux de criticités).

Il est décrit un produit programme d'ordinateur, ledit programme d'ordinateur comprenant des instructions de code permettant d'effectuer une ou plusieurs des étapes du procédé, lorsque ledit programme est exécuté sur un ordinateur.

Il est décrit un système comprenant une pluralité de compteurs communicants pour mettre en oeuvre un ou plusieurs des étapes du procédé.

Un « objet connecté » ou « compteur communicant » est un appareil domotique effectuant une ou plusieurs de ces télémesures d'eau et/ou énergie.

Un compteur communicant est généralement fixe, i.e. adossé à une source d'alimentation et/ou gaz et/ou électricité. Certains compteurs peuvent être amovibles.

Dans un mode de réalisation, un compteur communicant peut comprendre un module de communication, comme par exemple un émetteur radio ou un émetteur d'impulsions (sur un réseau câblé). Un module de communication peut être compris dans le corps du compteur ou être accessible à distance, par exemple via une liaison filaire (environnements difficiles, sous-sols par exemple).

Dans un mode de réalisation, un compteur communicant peut être "intelligent" au sens où il peut embarquer des ressources de calcul locales.

Dans un mode de réalisation, un compteur communicant peut être connecté à une box Internet, par Wifi ou par courant porteur en ligne.

Dans un mode de réalisation, un compteur communicant peut être « programmable à distance »

Dans un mode de réalisation, un compteur communicant peut être équipé d'un appareil de coupure à distance

Un compteur peut par exemple une prise électrique « intelligente » ou un robinet « intelligent », qui comprend des moyens de communication et/ou des moyens d'actuation physique et/ou des moyens de mesure. De manière optionnelle, un objet connecté peut comprendre un affichage (e.g. témoin lumineux comme une LED verte ou rouge, voire un écran), permettant un retour d'information à destination de l'usager.

Les moyens de communication sont généralement bidirectionnels (ou au moins unidirectionnel, un objet connecté peut être commandé à distance). Les moyens d'actuation physique comprennent par exemple des interrupteurs, résistances, condensateurs, valves, vis, roulements, etc) pour diminuer (progressivement) voire stopper l'accès à la ressource en eau ou en énergie, par exemple électrique. Les moyens de mesure comprennent des capteurs (e.g. courant, déplacement, température, débit d'eau etc) permettant de quantifier la consommation en eau ou en énergie.

Différentes technologies de télérelève implémentées dans et par les compteurs communicants sont envisageables, notamment la technologie "walk by/drive by", une installation fixe de type AMI (unidirectionnelle) ou bien encore une installation fixe de type AMR (bidirectionnelle). Différents types de réseau peuvent être utilisés (réseau AMI ou AMR, entre autres). Un réseau AMI correspond généralement à de petits réseaux de télérelève (simple relevés). Un réseau AMR (ou "Automatic meter reading" en anglais) est bidirectionnel, c'est-à-dire que le compteur émet et reçoit des informations, éventuellement en temps réel. L'usage de concentrateurs et/ou de répéteurs peut permettre d'améliorer la gestion de la grille de compteurs. Par exemple, un concentrateur peut envoyer les données récoltées de manière sécurisée à une plateforme de gestion logicielle via le réseau mobile Internet.

Dans un mode de réalisation, le système de gestion d'une ressource en eau et/ou en énergie comprend: - une pluralité de compteurs communicants configurés pour mesurer et communiquer par télérelève des données initiales de consommation de la ressource en eau et/ou en énergie; - un ou plusieurs processeurs configurés pour - déterminer un profil d'usager ; - déterminer un modèle de consommation dit de référence associé au profil d'usager ; - comparer la consommation en ressource en eau et/ou en énergie de l'usager avec ledit modèle de consommation de référence ; et - une pluralité d'interfaces utilisateurs configurées pour notifier l'usager en cas de différence défavorable ou favorable par rapport à un seuil prédéfini.

Les télémesures de compteurs peuvent être directes mais aussi indirectes. Par exemple des robots domestiques peuvent se déplacer dans l'habitat pour accéder à des données inaccessibles à des transmissions réseau. Les mesures peuvent aussi être indirectes, i.e. être effectuées par inférences ou par déduction. Par exemple, un téléviseur peut rendre accessible sa consommation énergétique et la transmettre de lui-même ou sur requête au service de télémesure.

Dans un mode de réalisation, un compteur communicant comprend des moyens de mesure et/ou des moyens de communication et/ou des moyens d'actuation physique.

Des moyens de mesure comprennent des instruments de mesure (capteurs). Des moyens de communication comprennent des modules de communication (carte réseau, émetteur, etc). Des moyens d'actuation comprennent des actuateurs ou actionneurs (e.g. valves, interrupteurs), de type pneumatique, hydraulique, électrique, mécanique (ou autre).

Le parc installé de compteurs peut être hétérogène, i.e. comprendre des compteurs équipés de fonctionnalités diverses. Par ordre de complexité croissante, un compteur communicant peut compter i.e. mesurer une grandeur physique. Additionnellement mais optionnellement, un compteur communicant peut communiquer directement ou indirectement ses données de mesure. Additionnellement mais optionnellement, un compteur communicant peut agir sur l'environnement (valves ou interrupteurs par exemple)

Dans un mode de réalisation, une interface utilisateur est accessible depuis un terminal client accédant à un serveur de données via au moins un réseau de communication et/ou est accessible depuis au moins un compteur communicant.

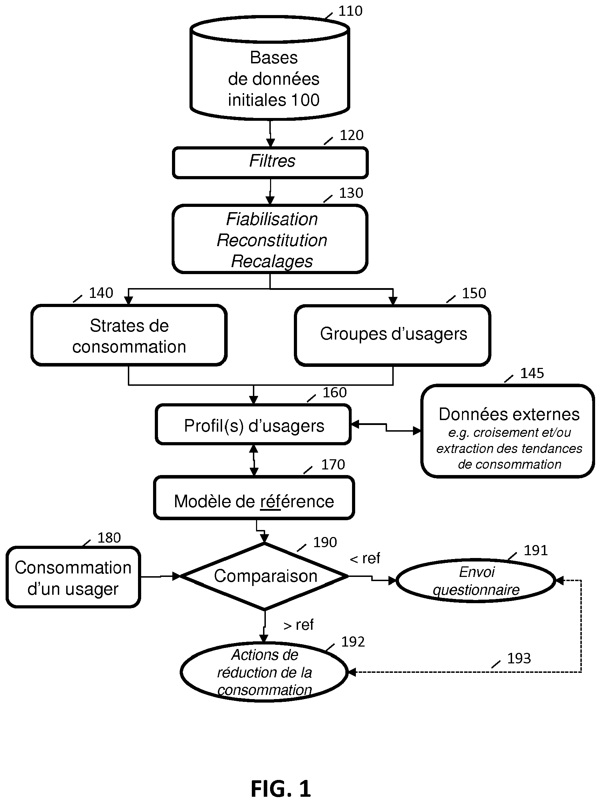

La figure 1 montre des exemples d'étapes du procédé selon l'invention.

Il est divulgué un procédé mis en oeuvre par ordinateur de détermination d'un profil d'usager d'une ressource en eau et/ou en énergie, le procédé comprenant: une première étape consistant à recevoir des données initiales de consommation de la ressource par une pluralité d'usagers; une seconde étape consistant à déterminer des strates de consommation de la ressource, chaque strate de consommation étant associée à une valeur de la consommation de la ressource selon un premier pas de temps; une troisième étape consistant à déterminer des groupes d'usagers, chaque groupe d'usagers étant associé à un taux de variation de sa la valeur de consommation selon un second pas de temps ; une quatrième étape consistant à déterminer au moins un profil d'usager en fonction des groupes d'usagers déterminés et des strates de consommation déterminées.

Une strate correspond à un niveau de consommation. Une strate de consommation est identifiée par un volume moyen d'une ressource consommé sur une période donnée (par exemple annuel). Elle est encadrée par une borne de consommation inférieure et une borne de consommation supérieure. Une borne est une valeur de consommation (exprimée par exemple en m$^3$ par an)

L'estimation de la consommation d'une ressource (par exemple en eau) par un ensemble d'usagers peut être effectuée de différentes manières. Le document de brevet WO2014/060655 décrit par exemple un procédé pour estimer en temps réel la consommation totale d'un fluide distribué à des usagers.

Dans la première étape de réception ou de collecte 110, différentes bases de données sont sollicitées ou accédées. L'application de techniques d'échantillonnage statistique peut être mise en oeuvre (par exemple un sous-ensemble de compteurs peut être déterminé) pour répondre aux besoins spécifique de l'analyse ou améliorer l'étude des modes de consommation.

Dans une étape optionnelle de filtrage 120, un ou plusieurs filtres sont appliqués afin d'exclure certains usagers ou certaines données considérées comme hors des objectifs de l'étude ou peu fiables. Les différentes données sont formatées i.e. rendues compatibles, puis fusionnées et/ou agrégées. Selon l'invention la démarche de fiabilisation des données revient à exclure les usagers présentant trop peu de données (e.g. présentant moins d'un an d'historique), les usagers présentant un taux de réception des index inférieur à 75%, les usagers présentant des index manquants consécutifs sur une semaine, etc. En d'autres termes, les données aberrantes, anormales peuvent être exclues pour améliorer notamment les étapes de modélisation de consommation.

Dans une étape optionnelle de reconstitution 130, certaines données sont reconstituées statistiquement. Dans un mode de réalisation, cette étape de reconstitution comprend deux sous-étapes. Dans une première sous-étape, une analyse statistique des index de consommation (analyse des tendances, identification de point intermédiaire sur les créneaux de 6h, etc) permet de valider certaines données. A l'inverse, d'éventuelles anomalies techniques sont identifiées. Dans une deuxième sous étape, les données invalides identifiées sont reconstituées par interpolation linéaire. Enfin, dans un mode de réalisation, des consommations journalières sont recalées. Le calcul consiste notamment à recaler l'ensemble des index à heure fixe (e.g. 00h, 06h, 12h et 18h), à calculer le volume consommé (différence entre deux index) sur ces plages horaires et enfin à agréger les données à une échelle journalière.

Dans un mode de réalisation, les données de consommation brutes 100 peuvent notamment comprendre un index de consommation (i.e. une consommation cumulée) horodatée. Dans un exemple de réalisation, les données sont disponibles sur un pas de temps de six heures (chaque usager pouvant avoir sa propre plage d'émission, les émissions d'index ne sont pas nécessairement synchronisées).

Les données de consommation initiales peuvent être diversement prétraitées (120, 130). Les données peuvent être dé-doublonnées. En cas de présence d'index négatifs, des intervalles de confiance peuvent être déterminés à différents pas de temps, puis les données peuvent être recalées à heures fixes. Dans un mode de réalisation, des données sont collectées pendant une durée supérieure ou égale à un an.

Dans le développement, le procédé comprend une seconde étape 140 consistant à déterminer des strates de consommation de la ressource. Chaque strate de consommation étant associée à volume global de consommation de la ressource sur le pas de temps de référence de l'étude (jours, mois, année). Les consommations sont qualifiées ou structurées en au moins deux strates de consommation. L'homogénéité des strates augmente de manière asymptotique à mesure que le nombre de strates augmente. Dans un mode de réalisation, le nombre de strates est itérativement augmenté jusqu'à ce que la variance intra-strate totale soit inférieure à un seuil prédéfini (fonction de l'asymptote). Le partitionnement peut notamment être effectué de manière à ce que a) la dispersion ou la variance des consommations soit sensiblement homogène pour un même groupe de consommateurs, et b) le nombre de consommateurs soit sensiblement le même dans les différents groupes de consommateurs.

Dans un développement, la seconde étape consistant à déterminer les strates de consommation est effectuée de manière à minimiser la variance intra-strate totale. Ceci est équivalent à dire que le nombre de strates de consommation est itérativement augmenté jusqu'à ce que le gain en homogénéité à l'ajout d'une strate supplémentaire soit inférieur à un seuil prédéfini. En d'autres termes, le nombre de strates de consommation est itérativement augmenté jusqu'à ce que la variance d'une strate quelconque soit inférieure à un seuil prédéfini.

Dans un développement, le procédé comprend une troisième étape 150 consistant à déterminer des groupes d'usagers, chaque groupe d'usagers étant associé à un taux de variation de la valeur de sa consommation selon un second pas de temps. Là encore, au moins deux groupes d'usagers 150 sont déterminés. La stratification des usagers en fonction de leur niveau de consommation est une étape indépendante de la structuration des usagers en groupes de variation de consommation (les étapes peuvent être réalisées successivement ou en parallèle).

Un groupe de consommateurs se caractérise par sa variation de consommation (par exemple, les consommations en eau fluctuent en fonction de la pluviométrie, des rythmes hebdomadaires des ménages, des vacances scolaires, des jours fériés, des événements sportifs etc). Différents types d'indicateurs peuvent être utilisés pour caractériser la variation de consommation et différentes méthodes statistiques peuvent être utilisées pour catégoriser les usagers en fonction de ces indicateurs de variation de consommation (classification ascendante hiérarchique, analyse en composantes principales, etc).

Dans un développement, le procédé comprend une quatrième étape 160 consistant à déterminer pour chaque usager un profil de consommation en fonction de son appartenance à une strate de consommation et à un groupe de variation de consommation.

Dans un développement, le procédé comprend en outre une cinquième étape consistant à recevoir des données additionnelles pouvant être mises en correspondance avec le profil d'usager déterminé.

Les données additionnelles peuvent être de nature sociale, démographique et/ou économique.

Dans un développement de l'invention, les données additionnelles 145 peuvent être mises en correspondance avec le ou les profils d'usagers déterminés. Cette étape permet d'identifier ou d'expliquer une tendance de consommation à l'échelle d'un territoire (bâtiment, quartier, commune, intercommunalité...).

Dans un développement, les données additionnelles comprennent des données cartographiques (i.e. des données de nature spatiale, comprenant des données de géolocalisation dans l'espace).

Le croisement des profils d'usager avec des données tierces 145 par exemple de nature sociodémographique permet notamment de déterminer des tendances de consommation sur une zone prédéterminée. Par exemple, des données existantes ou publiques de type INSEE pourront être exploitées et permettre de déterminer la répartition spatiale des profils d'usagers par zone géographique ; il sera également possible d'en déduire des informations sociodémographiques sur les profils d'usager dans une zone géographique donnée ou d'expliquer les tendances de consommation observées en fonction des caractéristiques socio-économiques des ensembles étudiés

Plus encore, les tendances de consommation peuvent être croisées avec des données territoriales pour permettre ultérieurement de déterminer des stratégies d'action sur une zone prédéterminée en vue de réduire la consommation de ressource en eau et/ou énergie.

Dans un développement, le procédé comprend en outre une sixième étape consistant à déterminer une tendance de consommation à partir du profil d'usager déterminé et desdites données additionnelles reçues.

Dans un développement, la quatrième étape consistant à déterminer des profils d'usagers comprend une étape consistant à déterminer des profils d'usagers, chaque profil d'usager étant associé à une strate et un groupe de variation de consommation.

Dans un développement, le procédé comprend en outre une septième étape consistant à agréger (ou regrouper) plusieurs profils d'usagers.

Dans un développement, la quatrième 160 d'identification des profils de consommation peut se réaliser soit directement par le croisement des groupes de niveaux et de variations de consommations mais peut aussi faire l'objet d'un processus d'agrégation supplémentaire si le nombre de profil est considéré comme trop important. Cette reclassification, ou agrégation des profils peut être effectuée par l'application de méthodes de clustering ou d'analyse statistique multivariée (e.g. ACP, K-means, CAH ascendante hiérarchique, etc).

Dans un développement, le procédé comprend en outre une huitième étape consistant à déterminer un modèle de consommation dite de référence associé à un profil d'usager.

Un modèle de consommation dite de référence 170 peut être associé à un profil d'usager. Pour chaque usager étudié, le modèle de consommation permet d'établir une (valeur de) consommation attendue, dite de référence, en fonction de l'historique de consommation de l'usager et/ou de ses caractéristiques sociologiques et techniques (type de ménage par exemple, type d'habitat, type d'équipement électroménager).

La modélisation pour chaque usager d'une consommation de référence et l'identification des cas de surconsommation et sous-consommation permet, par agrégation, d'identifier de potentiel d'économie de ressource par ensemble étudié (bâtiment, parc d'habitat, quartier, commune, intercommunalité) et le nombre de ménages devant faire l'objet de stratégies proactives de sensibilisation aux économies de ressource.

Dans un développement, le procédé comprend en outre une neuvième étape consistant à comparer la consommation en ressource en eau et/ou en énergie d'un usager avec le modèle de consommation de référence.

La neuvième étape 190 consiste à comparer la consommation en ressource en eau et/ou en énergie d'un usager 180 avec le modèle de consommation de référence.

Dans un développement, le procédé comprend en outre une dixième étape consistant à notifier l'usager en cas de différence défavorable ou favorable par rapport à un seuil prédéfini.

La dixième étape 192 peut notamment consister à notifier ou alerter l'usager en cas de différence favorable ou défavorable par rapport à cette consommation de référence (surconsommation ou sous-consommation), en vue de prendre des actions correctives pour réduire la consommation en ressource. Si la différence est favorable (sous-consommation), un questionnaire peut par exemple être envoyé à l'étape 191 à l'usager considéré de manière à collecter les bonnes pratiques, lesquelles peuvent être en retour 193 mises à disposition d'un usager en état de surconsommation.

Dans un développement, les données de consommation sont des données télérelevées.

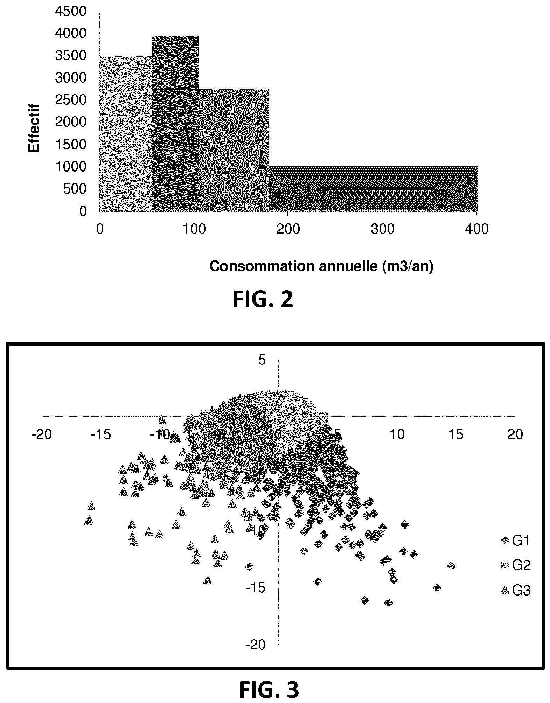

La figure 2 montre un exemple de strates de consommation.

Dans une seconde étape 140, les consommations sont partitionnées en groupes de niveaux de consommation (ou strates, selon des groupes disjoints.-i.e. sans chevauchement, un usager donné appartient à une strate et une seule).

Les groupes ne sont pas nécessairement de tailles égales. Le nombre de groupes peut être élevé (granularité d'analyse fine) ou restreint (analyses rapides). Le nombre de groupes et le nombre d'usagers par groupe peut être itérativement optimisé afin de permettre la granularité d'analyse requise. Le nombre de groupes et le nombre d'usagers par groupe peut être statique ou défini une fois pour toutes (e.g. périmètre d'étude constant) mais aussi être dynamique (i.e. configurable en tant que paramètre d'étude, notamment pour atténuer ou compenser les effets de bord dus à des discrétisations territoriales par exemple).

La définition des strates de consommation est un processus itératif entre le choix du nombre de strates et le choix des bornes, ce processus itératif permettant d'obtenir des groupes d'usagers homogènes en termes de consommation d'eau. Dans un mode de réalisation, les bornes des strates peuvent être définies selon une méthode dérivée de celle proposée par *Dalenius et Hodges* qui permet de maximiser l'homogénéité au sein des strates.

La figure 3 montre un exemple de partitionnement des usagers en fonction des groupes de variations de consommation.

La variation de consommation peut être définie à partir d'indicateurs comme la répartition de la consommation sur chaque jour de la semaine, sur chaque mois de l'année, entre les jours ouvrés et les jours fériés et de vacances, la corrélation entre la consommation et la température ou la pluviométrie, etc. Ces différents indicateurs sont regroupés en groupes homogènes, à l'aide d'une classification ascendante hiérarchique, puis transformés en variables synthétiques, grâce à une analyse en composantes principales (par exemple). A partir de ces variables synthétiques, les usagers sont regroupés entre eux (étape 150), par exemple grâce à la méthode des K-means, pour former ici des groupes de variation dont un exemple représenté à la figure 3.

À partir d'indicateurs indépendants, les usagers peuvent donc être segmentés ou partitionnés (i.e. sans recouvrement) en plusieurs groupes (troisième étape 150) de variation de consommation cohérents, caractérisés par une ou plusieurs variables de synthèse (ici trois groupes 301, 302, 303). Le partitionnement des usagers en groupe distincts peut se faire selon différentes techniques statistiques de classification.

Avantageusement, dans un mode de réalisation, la définition des groupes est effectuée en utilisant la méthode des K-Means. Les groupes déterminés sont par suite caractérisés au moyen d'une pluralité de variables synthétiques, par exemple à l'aide d'une Analyse Factorielle Discriminante (ou d'une autre technique selon l'analyse statistique multivariée).

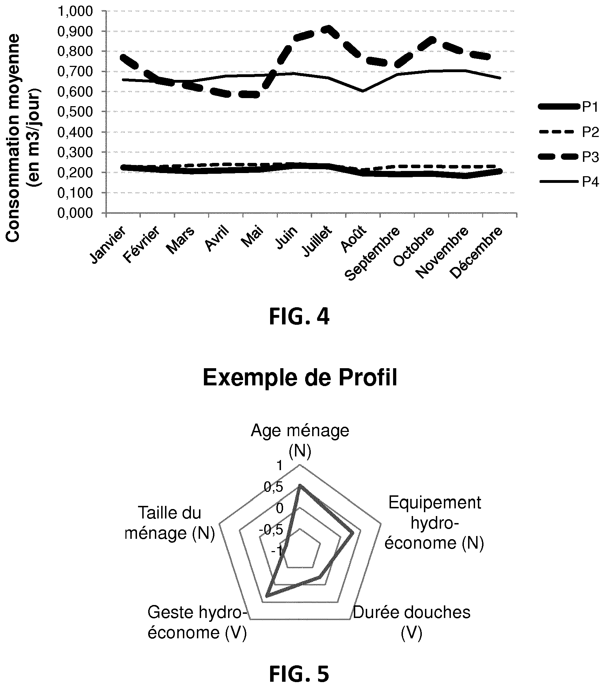

La figure 4 montre un exemple de quatre profils de consommation des usagers avec une présentation de leur consommation journalière moyenne au cours d'une année.

La quatrième étape 160 du procédé détermine au moins un profil d'usager.

L'abscisse du graphique représente le temps et l'ordonnée du graphique représente la consommation moyenne en mètres cubes par jour. Les exemples des groupes ou profils représentés (P1, P2, P3, P4) se distinguent à la fois par sa variation de consommation annuelle mais aussi par leur variation de consommation hebdomadaire. Les profils P1 et P2 s'opposent aux profils P3 et P4 dans leurs niveaux de consommation respectivement faibles et forts. Les profils P2 et P4 s'opposent aux profils P1 et P3 dans leur variation de consommation annuelle respectivement faible et forte.

Dans l'exemple, les profils de consommateurs identifiés comme stables dans l'année (P2 et P4) ont une consommation plus importante le week-end qu'en semaine. C'est l'inverse qui est observé pour les profils de consommations identifiés comme variables dans l'année (P1 et P3). "Par exemple, la consommation hebdomadaire des usagers en habitat résidentiel peut présenter un pic de consommation le mercredi tandis qu'en habitat collectif ce pic de consommation est observé le jeudi.

Selon l'invention, des segments d'usagers sont déterminés par croisement entre les strates de consommation et les groupes de variation (consommation annuelle, consommation hebdomadaire). Dans l'exemple, quatre profils d'usagers sont identifiés. Le profil P1 correspond aux consommateurs dits économes (i.e. faible niveau de consommation et faible variation de consommation). Le profil P2 correspond aux consommateurs dits saisonniers (faible niveau, forte variation). Le profil P3 correspond aux consommateurs dits « gros » consommateurs (i.e. fort niveau, faible variation). Enfin le profil correspond aux consommateurs dits consommateurs dits variables (i.e. fort niveau, forte variation).

La figure 5 illustre un croisement de données de consommation avec des données sociodémographiques par exemple collectées activement auprès des usagers (enquêtes).

Le croisement des données de consommation avec des données (par exemple sociodémographiques 145) selon la cinquième étape du procédé permet de construire une matrice des déterminants de consommations pour chaque profil. L'impact de chaque usage peut être qualifié par son influence sur le niveau (N) ou la variation (V) de consommation.

La caractérisation des profils à l'aide de données sociodémographiques permet de définir quels sont les déterminants ou usages de l'eau qui expliquent l'appartenance d'un individu à un profil. Pour cela et par exemple, les données sur les usages de l'eau des ménages dans leur logement peuvent être collectées par le biais d'enquêtes. Sur la base des réponses apportées à un questionnaire, certains usages structurant les modes de consommation des ménages peuvent être identifiés. Dans un mode de réalisation de l'invention, une trentaine de facteurs dits déterminants sont identifiés et peuvent avantageusement avoir un caractère explicatif de la consommation d'eau des ménages.

Des tests de corrélation, suivis d'analyses discriminantes, permettent notamment d'évaluer le poids de chaque déterminant sur la structuration du mode de consommation (en termes d'impact sur le niveau ou la variation de consommation) et de les hiérarchiser pour chaque profil mais aussi pour chaque usager afin d'opérer une présélection des axes de progression des usagers ou groupes d'usagers sur leur consommation. Cette analyse automatisée des déterminants de consommations, modulables par individu et par groupe d'individus, peut contribuer au support de construction de stratégies de réduction des consommations d'eau.

Il est créé à la huitième 'étape optionnelle 170 un modèle de consommation associé à chaque groupe d'usager, les groupes étant partitionnés (sans recouvrement) par le procédé selon l'invention.

En d'autres termes, à partir des données brutes de consommation télé relevées, après des opérations comprenant une ou plusieurs opérations choisies parmi des opérations d'échantillonnage statistique, de filtrage et de recalage, les groupes usagers sont partitionnés en groupes homogènes, chaque groupe homogène étend associé à un modèle de consommation d'eau de manière journalière.

Chaque modèle de consommation permet de simuler ou d'anticiper la consommation de ressource en eau en se fondant sur les comportements passés (modèle de séries chronologiques) mais aussi sur l'influence de facteurs externes qui peuvent expliquer la consommation (modèle de régression) comme la température, certains effets calendaires (jours de la semaine, jours fériés et vacances), ou certains paramètres socio-économiques et techniques déterminants (taille du ménage, durée des douches, équipement hydro-économe).

Dans un mode de réalisation, un modèle 170 associé à un groupe d'usagers peut être assimilé à un modèle de type ARMAX, de la forme :

$$y_t = \beta \vec{x}_t + u_t$$

- où $y_t$ est la consommation au temps $t$, $\vec{x}_t$ est un vecteur de facteurs externes et $u_t$ une erreur qui suit un modèle ARMA. Dans un mode de réalisation simplifié, ne prenant pas en compte la dimension temporelle, le modèle appliqué peut être de type régression linéaire multiple. Dans ce cas, u est une erreur suivant une loi normale. Quelque soit le modèle, ce dernier est calé (i.e. estimation des paramètres) sur chacun des profils.

Un tel modèle permet en particulier de prédire la consommation du groupe concerné, à court terme (par exemple à la fin du mois en cours).

Le modèle de consommation tel que déterminé permet de comparer la consommation d'un individu ou d'un groupe à la consommation d'autres groupes du même profil (comparaison entre comparables). Cette comparaison des consommations peut notamment être effectuée selon un pas de temps journalier, hebdomadaire, mensuel, voire annuel.

D'autres analyses comparatives peuvent être effectuées à partir des modèles de consommation déterminés par le procédé selon l'invention (panel d'analyse comparative) comme la comparaison 190 de la consommation d'un individu avec la consommation moyenne des usagers situés à proximité (dans le même bâtiment, quartier ou commune).

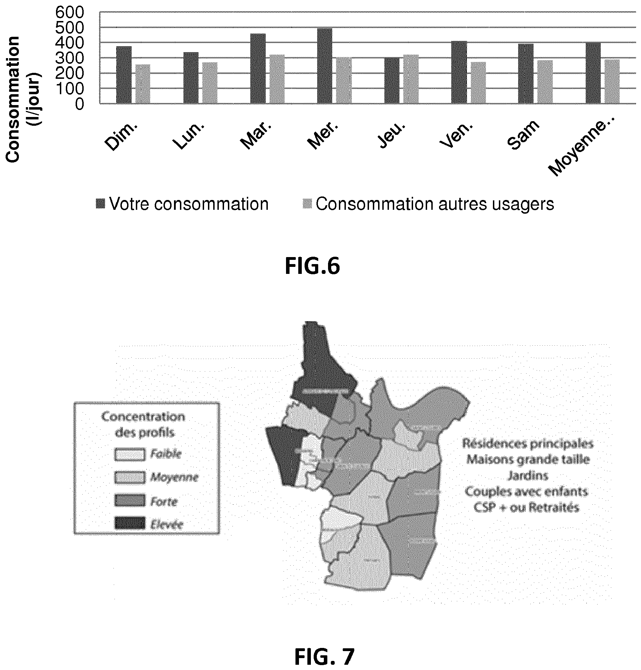

La figure 6 illustre un exemple de ces différentes modalités de comparaison des consommations d'eau.

Selon un mode dit individuel, un usager (appartenant à un groupe) - ou un groupe d'usager - peut comparer sa propre consommation actuelle par rapport à sa consommation effective observée dans le passé dans les mêmes conditions (exemple de comparaison de la consommation du mois en cours avec celle du même mois l'année précédente). L'usager ou groupe d'usagers peut aussi comparer sa consommation par rapport à sa consommation de référence (c'est-à-dire telle que déterminée par le modèle de consommation qui lui est associé, qui peut notamment moduler une consommation standard et prendre en compte des effets climatiques et calendaires)

Selon un mode dit collectif, un usager ou un groupe d'usagers peut comparer sa consommation par rapport à celle des individus appartenant au même profil que le sien (effet structurel de la consommation, figure 6) ou avec son voisinage (effet territorial, figure 7).

La figure 7 illustre un exemple d'analyse territoriale des profils de consommation d'eau, en l'espèce en fonction de la concentration dans l'espace des différents groupes d'usagers déterminés par le procédé.

L'analyse territoriale des consommations et des usages a notamment pour but de croiser les données de consommation préalablement construites avec des données agrégées sur le territoire afin de comprendre comment se répartissent ces phénomènes dans l'espace.

L'analyse territoriale des profils de consommation permet par exemple de déterminer des corrélations existantes entre la surreprésentation de certains profils de consommation dans certains quartiers et les caractéristiques génériques de ces derniers en termes de population, d'habitat, d'activités des ménages.

Pour identifier la surreprésentation de certains profils de consommation, un classement par quartiles est préconisé. Il permet de croiser les profils de consommation avec des données publiques (par exemple de type INSEE, données INSEE disponibles à la maille du quartier) sous une forme préalablement normalisée. Ce croisement des données de consommation et des données territoriales peut se faire par exemple au moyen d'une Analyse Factorielle Discriminante par exemple.

Il existe principalement trois sources de données externes disponibles sur les ménages à différents échelons territoriaux. Il existe les données collectées à l'échelle du logement (le plus souvent collectées par enquête), celles à l'échelle du bâtiment (rendues disponibles par les bailleurs ou par des enquêtes), celles à l'échelle d'un quartier ou d'une commune (données issues du recensement - INSEE). A ces échelons, nous pouvons retrouver des données socio-territoriales communes comme celles sur le logement, les conditions de vie, la démographie et l'économie des ménages, ou bien des données spécifiques (équipement des ménages, représentations, historique d'occupation du logement). Après validation des indicateurs territoriaux les plus fiables et pertinents, et en fonction des besoins de l'étude, un paramétrage de l'échelon territorial d'analyse et du types de corrélations à analyser peut être préconisé.

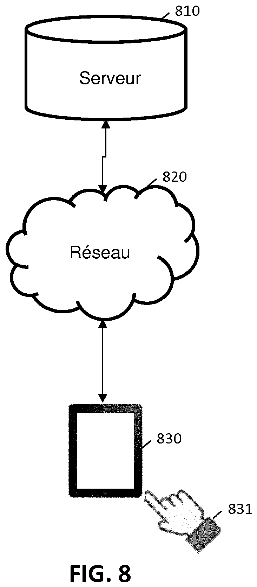

La figure 8 illustre un exemple d'accès aux données et analyses de consommation.

Dans un développement, le procédé comprend en outre une onzième étape consistant à fournir un accès distant aux informations relatives aux données de consommation, aux groupes d'usagers, aux profils d'usagers, aux tendances de consommation ou aux modèles de consommation de référence.

Il est divulgué un produit programme d'ordinateur, ledit programme d'ordinateur comprenant des instructions de code permettant d'effectuer les étapes du procédé lorsque ledit programme est exécuté sur un ordinateur.

Il est divulgué un système comprenant des moyens pour mettre en oeuvre les étapes du procédé.

Dans un développement, le système comprend au moins un terminal client accédant à au moins un serveur de données via au moins un réseau de communication.

Dans un mode de réalisation, les étapes du procédé sont effectuées par un ou plusieurs serveurs 810, par exemple hébergés dans le « Cloud » (informatique dans les nuages). Les usagers 831 (clients individuels, industriels, administratifs, collectivités et leurs représentants et administrateurs, etc) peuvent accéder aux données initiales ou modifiées par le procédé, à distance via des terminaux clients 830 accédant à un ou plusieurs réseaux informatiques 820.

Différents résultats (intermédiaires et/ou finaux) peuvent être rendus accessibles aux usagers, par exemple au travers de portails ou d'applications informatiques (e.g. Web, Internet, Intranet, app ou application mobile, etc) accessibles depuis les terminaux 830 Les interfaces client correspondantes (accédant à un ou plusieurs serveurs de données 810) peuvent notamment comprendre des fonctionnalités de suivi global des consommations, de suivi et d'analyse des profils de consommations, d'analyse territoriale des consommations (selon différentes échelles e.g. des quartiers), de visualisation et analyse des tendances de consommation par profil, de l'état du réseau en temps réel, des options de personnalisation des outils de suivi, des outils de gestion de la relation client, etc.

**Revendications**

1. Procédé mis en oeuvre par ordinateur de gestion d'une ressource en eau et/ou en énergie, le procédé comprenant les étapes consistant à:

   - recevoir (110) des données initiales de consommation de la ressource en eau et/ou en énergie d'au moins un usager, lesdites données de consommation étant télérelevées depuis une pluralité de compteurs communicants ;
   - déterminer un profil d'usager ;
   - déterminer un modèle (170) de consommation, dit de référence, associé au profil d'usager ;
   - comparer la consommation en ressource en eau et/ou en énergie de l'usager avec ledit modèle de consommation de référence; et
   - notifier l'usager en cas de différence par rapport à un seuil prédéfini ; ledit procédé comprenant en outre l'étape consistant à diminuer et/ou augmenter de manière automatique l'approvisionnement en eau et/ou énergie en fonction de la différence avec le seuil prédéfini.

2. Procédé selon la revendication 1, l'étape de détermination d'un profil d'usager comprenant une étape (140) consistant à déterminer des strates de consommation de la ressource, chaque strate de consommation étant associée à une valeur de la consommation de la ressource selon un premier pas de temps ;

   - une étape (150) consistant à déterminer des groupes d'usagers, chaque groupe d'usagers étant associé à un taux de variation de la valeur de consommation selon un second pas de temps ;
   - une étape (160) consistant à déterminer au moins un profil d'usager en fonction des groupes d'usagers déterminés et des strates de consommation déterminées.

3. Procédé selon la revendication 2, le procédé comprenant une étape consistant à recevoir des données additionnelles pouvant être mises en correspondance avec le profil d'usager déterminé et une étape consistant à déterminer une tendance de consommation à partir du profil d'usager déterminé et desdites données additionnelles reçues.

**4.** Procédé selon la revendication 2, l'étape (140) consistant à déterminer les strates de consommation étant effectuée de manière à minimiser la variance intra-strate.

**5.** Procédé selon la revendication 2, l'étape (160) consistant à déterminer des profils d'usagers comprenant une étape consistant à déterminer des profils d'usagers, chaque profil d'usager étant associé à une strate et un groupe de variation de consommation.

**6.** Procédé selon l'une des revendications précédentes, comprenant en outre une étape consistant à agréger plusieurs profils d'usagers.

**7.** Procédé selon l'une des revendications précédentes, comprenant en outre une étape (810, 820, 830) consistant à fournir un accès distant aux informations relatives aux données de consommation, aux groupes d'usagers, aux profils d'usagers, aux tendances de consommation ou aux modèles de consommation de référence.

**8.** Procédé selon la revendication 1, la modification de l'approvisionnement en eau et/ou en énergie étant fonction de niveaux de criticité associés aux compteurs communicants.

**9.** Procédé selon la revendication 8, un niveau de criticité associé à un compteur communicant étant configurable par l'usager.

**10.** Procédé selon la revendication 1, la modification de l'approvisionnement en eau et/ou énergie étant progressive et/ou sélective.

**11.** Produit programme d'ordinateur, ledit programme d'ordinateur comprenant des instructions de code permettant d'effectuer les étapes du procédé selon l'une quelconque des revendications 1 à 10, lorsque ledit programme est exécuté sur un ordinateur.

**12.** Système de gestion d'une ressource en eau et/ou en énergie, comprenant :

- une pluralité de compteurs communicants configurés pour mesurer et communiquer par télérelève des données initiales de consommation de la ressource en eau et/ou en énergie ;
- un ou plusieurs processeurs configurés pour

- déterminer un profil d'usager ;
- déterminer un modèle (170) de consommation dit de référence associé au profil d'usager.
- comparer la consommation en ressource en eau et/ou en énergie de l'usager avec ledit modèle de consommation de référence ; et

- une pluralité d'interfaces utilisateurs configurées pour notifier l'usager en cas de différence défavorable ou favorable par rapport à un seuil prédéfini ;

lesdits un ou plusieurs processeurs étant de plus configurés pour diminuer et/ou augmenter de manière automatique l'approvisionnement en eau et/ou énergie en fonction de la différence avec le seuil prédéfini.

**13.** Système selon la revendication 12, un compteur communicant comprenant des moyens de mesure et/ou des moyens de communication et/ou des moyens d'actuation physique.

**14.** Système selon la revendication 12 ou 13, une interface utilisateur étant accessible depuis un terminal client accédant à un serveur de données via au moins un réseau de communication et/ou étant accessible depuis au moins un compteur communicant.

**Patentansprüche**

**1.** Computerimplementiertes Verfahren zur Verwaltung einer Wasser- und/oder Energieressource, das Verfahren umfassend die Schritte, die aus Folgendem bestehen:

- Empfangen (110) von anfänglichen Verbrauchsdaten der Wasser- und/oder Energieressource von mindestens einem Nutzer, wobei die Verbrauchsdaten von einer Vielzahl von kommunizierenden Zählern fernausgelesen werden;
- Bestimmen eines Nutzerprofils;
- Bestimmen eines Verbrauchsmusters (170), bezeichnet als Referenz, das mit dem Nutzerprofil assoziiert ist;
- Vergleichen des Verbrauchs der Wasser- und/oder Energieressourcen des Nutzers mit dem Referenzverbrauchsmodell; und
- Benachrichtigen des Nutzers im Fall einer Abweichung von einem vordefinierten Schwellenwert; das Verfahren ferner umfassend den Schritt, der darin besteht, die Wasser- und/oder Energiezufuhr abhängig von der Abweichung von dem vordefinierten Schwellenwert automatisch zu verringern und/oder zu erhöhen.

**2.** Verfahren nach Anspruch 1, der Schritt eines Bestimmens eines Nutzerprofils umfassend einen Schritt (140), der darin besteht, Verbrauchsschichten der Ressource zu bestimmen, wobei jede Verbrauchsschicht mit einem Wert des Verbrauchs der Ressource gemäß einem ersten Zeitschritt assoziiert ist;

- einen Schritt (150), der darin besteht, Nutzergruppen zu bestimmen, wobei jede Nutzergruppe mit einer Änderungsrate des Verbrauchswerts gemäß einem zweiten Zeitschritt assoziiert ist;
- einen Schritt (160), der darin besteht, abhängig von den bestimmten Nutzergruppen und den bestimmten Verbrauchsschichten mindestens ein Nutzerprofil zu bestimmen.

3. Verfahren nach Anspruch 2, das Verfahren umfassend einen Schritt, der darin besteht, zusätzliche Daten zu empfangen, die auf das bestimmte Nutzerprofil abgebildet werden können, und einen Schritt, der darin besteht, einen Verbrauchstrends aus dem bestimmten Nutzerprofil und den empfangenen zusätzlichen Daten zu bestimmen.

4. Verfahren nach Anspruch 2, wobei der Schritt (140), der darin besteht, die Verbrauchsschichten zu bestimmen, durchgeführt wird, um die Varianz zwischen Schichten zu minimieren.

5. Verfahren nach Anspruch 2, der Schritt (160), der darin besteht, Nutzerprofile zu bestimmen, umfassend einen Schritt, der darin besteht, Nutzerprofile zu bestimmen, wobei jedes Nutzerprofil mit einer Schicht und einer Gruppe von Verbrauchsvariationen assoziiert ist.

6. Verfahren nach einem der vorherigen Ansprüche, ferner umfassend einen Schritt, der darin besteht, mehrere Nutzerprofile zusammenzufassen.

7. Verfahren nach einem der vorherigen Ansprüche, das ferner einen Schritt (810, 820, 830) umfasst, der darin besteht, einen Fernzugriff auf Informationen über Verbrauchsdaten, Nutzergruppen, Nutzerprofile, Verbrauchstrends oder Referenzverbrauchsmuster bereitzustellen.

8. Verfahren nach Anspruch 1, wobei die Änderung der Wasser- und/oder Energieversorgung von Kritikalitätsstufen abhängt, die mit den kommunizierenden Zählern assoziiert sind.

9. Verfahren nach Anspruch 8, wobei eine Kritikalitätsstufe, die mit einem kommunizierenden Zähler assoziiert ist, vom Nutzer konfigurierbar ist.

10. Verfahren nach Anspruch 1, wobei die Änderung der Wasser- und/oder Energieversorgung schrittweise und/oder selektiv erfolgt.

11. Computerprogrammprodukt, wobei das Computerprogramm Codeanweisungen zur Durchführung der Schritte des Verfahrens nach einem der Ansprüche 1 bis 10 umfasst, wenn das Programm auf einem Computer ausgeführt wird.

12. System zur Verwaltung einer Wasser- und/oder Energieressource, umfassend:

- eine Vielzahl von kommunizierenden Zählern, die konfiguriert sind, um anfängliche Daten über den Verbrauch der Wasser- und/oder Energieressource zu messen und per Fernabfrage zu übermitteln;
- einen oder mehrere Prozessoren, die zu Folgendem konfiguriert sind

- Bestimmen eines Nutzerprofils;
- Bestimmen eines sogenannten Referenzverbrauchsmusters (170), das mit dem Nutzerprofil assoziiert ist.
- Vergleichen des Verbrauchs der Wasser- und/oder Energieressourcen des Nutzers mit dem Referenzverbrauchsmodell; und

- eine Vielzahl von Benutzerschnittstellen, die konfiguriert sind, um den Benutzer zu benachrichtigen, wenn eine ungünstige oder günstige Abweichung von einem vordefinierten Schwellenwert vorliegt;

wobei der eine oder die mehreren Prozessoren ferner konfiguriert sind, um die Wasser- und/oder Energiezufuhr abhängig von der Abweichung von dem vordefinierten Schwellenwert automatisch zu verringern und/oder zu erhöhen.

13. System nach Anspruch 12, wobei ein kommunizierender Zähler Messeinrichtungen und/oder Kommunikationseinrichtungen und/oder physikalische Aktuatoreinrichtungen umfasst.

14. System nach Anspruch 12 oder 13, wobei eine Benutzerschnittstelle von einem Client-Terminal aus zugänglich ist, das über mindestens ein Kommunikationsnetz auf einen Datenserver zugreift, und/oder von mindestens einem kommunizierenden Zähler aus zugänglich ist.

## Claims

1. A computer-implemented method of managing a water and/or energy resource, the method comprising the steps of:

- receiving (110) initial consumption data for the water and/or energy resource of at least one user, said consumption data being remotely read from a plurality of communicating meters;
- determining a user profile;
- determining a consumption model (170), known as the reference model, associated with the user profile;
- comparing the user's consumption of water and/or energy resources with the said reference consumption model; and
- notifying the user in the event of a difference from a predefined threshold; said method further comprising the step of automatically decreasing and/or increasing the supply of water and/or energy as a function of the difference from the predefined threshold.

2. A method as claimed in claim 1, the step of determining a user profile comprising a step (140) consisting in determining strata of consumption of the resource, each stratum of consumption being associated with a value of the consumption of the resource according to a first time step;

- a step (150) consisting in determining groups of users, each group of users being associated with a rate of variation of the consumption value according to a second time step;
- a step (160) consisting of determining at least one user profile as a function of the user groups determined and the consumption strata determined.

3. A method as claimed in claim 2, the method comprising a step of receiving additional data that can be matched to the determined user profile and a step of determining a consumption trend from the determined user profile and said additional data received.

4. A method according to claim 2, the step (140) consisting in determining the consumption strata being carried out in such a way as to minimise the intra-stratum variance.

5. A method according to the claim 2, the step (160) consisting in determining user profiles comprising a step consisting in determining profiles of users, each profile of user being associated with a stratum and a group of variation of consumption.

6. A method according to one of the preceding claims, comprising in addition a step consisting in aggregating several user profiles.

7. A method according to one of the preceding claims, comprising in addition a step (810, 820, 830) consisting of providing remote access to information relating to data of consumption, to groups of users, to profiles of users, to trends of consumption or to models of consumption of reference.

8. A method according to claim 1, the modification of the supply of water and/or energy being a function of levels of criticality associated with communicating meters.

9. A method according to claim 8, a level of criticality associated with a communicating meter being configurable by the user.

10. A method according to claim 1, modification supply water and/or energy being progressive and/or selective.

11. Computer programme product, said computer programme comprising code instructions for performing the steps of the method according to any of claims 1 to 10, when said programme is run on a computer.

12. System for management of a water and/or energy resource, comprising:

- a plurality of communicating meters configured to measure and communicate by remote reading of initial data of consumption of the resource water and/or energy;
- one or several processors configured for

- determining a user profile;
- determining a model (170) of consumption reference associated with the user profile;:
- comparing the consumption of water and/or in energy resources of the user with said model of consumption of reference; and

- a plurality of user interfaces configured for notifying the user in case of an unfavourable or favourable difference with respect to a predefined threshold;

said one or several processors being further configured to decrease and/or increase automatically the supply of water and/or energy in function of the difference with the predefined threshold.

13. System according to the claim 12, a communicating meter comprising measuring means and/or communication means and/or physical actuation means.

14. System according to claim 12 or 13, a user interface being accessible from a client terminal accessing a data server via at least one communication network and/or being accessible from at least a communicating meter.

110

**Bases
de données
initiales 100**

120

*Filtres*

130

*Fiabilisation
Reconstitution
Recalages*

140

**Strates de
consommation**

150

**Groupes d'usagers**

145

**Données externes**
*e.g. croisement et/ou
extraction des tendances
de consommation*

160

Profil(s) d'usagers

170

Modèle de <u>référence</u>

180

Consommation
d'un usager

190

Comparaison

< ref

191

*Envoi
questionnaire*

> ref

192

*Actions de
réduction de la
consommation*

193

**FIG. 1**

**FIG. 2**

**FIG. 3**

**FIG. 4**

**Exemple de Profil**

**FIG. 5**

FIG.6

FIG. 7

810

Serveur

820

Réseau

830

831

**FIG. 8**

## RÉFÉRENCES CITÉES DANS LA DESCRIPTION

**Documents brevets cités dans la description**

- FR 2972529 A1
- CN 104362756
- WO 2014060655 A